# EUROPEAN PATENT SPECIFICATION

(11) **EP 2 148 805 B1**
(45) Date of publication and mention of the grant of the patent: **11.08.2010**
(21) Application number: 07736814.0
(22) Date of filing: 27.04.2007
(51) Int. Cl.: B62K 23/06

(54) **COLLAPSIBLE CONTROL LEVER DEVICE**
ZUSAMMENKLAPPBARE BETÄTIGUNGSHEBELVORRICHTUNG
DISPOSITIF DE LEVIER DE COMMANDE PLIABLE

(43) Date of publication of application: 03.02.2010
(73) Proprietor: Freni Brembo S.p.A., 24035 Curno (Bergamo) (IT)
(72) Inventor: LAVEZZI, Roberto, I-24030 Brembate Di Sopra (Bergamo) (IT); COLOMBO, Marcello, I-20052 Monza (IT)
(74) Representative: Leihkauf, Steffen Falk
(86) International application number: PCT/IT2007/000311
(87) International publication number: WO 2008/132765

(56) References cited:
- EP-A- 1 398 259
- DE-A1- 10 025 696
- US-A- 4 726 252
- US-A1- 2005 145 059
- US-B1- 6 393 936
- US-B1- 7 201 080

## Description

The present invention relates to control lever devices for vehicles, particularly to a collapsible lever device for motorcycles as defined in the preamble of claim 1. Such a collapsible control lever is shown in DE 100 25 696.

In motorcycles, the brake and clutch are manually actuated by means of a lever device that is mounted on the handlebar of the motorcycle, a hydraulic tube extending from this lever device to the system to be controlled, such as a hydraulically actuated brake or a clutch.

The lever of the lever device is usually arranged on the grip of the handlebar and the motorcyclist, in order to actuate the lever, grips the handlebar together with the lever and clenches the hand such as to rotate the lever towards the grip. The movement of the lever produces, in turn, a thrust force acting on a hydraulic piston, the stroke or position thereof defining the amount of fluid pressure inside said hydraulic pipe for controlling the brake or clutch.

Since these levers are normally the outermost and most exposed part of the motorcycle, the end of the lever can more or less awkwardly hit the ground upon falling, thereby causing the breakage or deformation either of the lever or the support structure fixing the latter to the handlebar.

A broken lever makes a clutch or a manual brake unserviceable, and is accordingly a serious damage that prevents the motorcyclist from continuing a ride or a race.

In order to overcome the problem of accidental failure of the control lever, collapsible lever devices have been proposed in which the lever has a base portion hinged to the control device and suitable to act on the hydraulic piston, as well as a grip portion pivotally hinged to the base portion about a collapse axis in the event of impact against the lever. This known solution allows the motorcyclist to reposition the lever grip portion after a fall and to complete the ride or race.

With known solutions, the pivoting connection between the base portion and lever grip portion is made by means of a screw inserted in two co-axial holes formed in two outer wings of one of the portions and in a hole formed in an inner wing of the other lever portion interposed between the two outer wings. The screw tightens the two outer wings to the inner wing thereby generating a frictional resistance that holds the grip portion in the normal use position thereof.

The frictional resistance between the two portions of the lever must be on the one side sufficiently high to avoid the accidental collapse of the lever and on the other side, this resistance must be sufficiently low to ensure the collapse of the lever in the event of a fall.

Due to the fact that the frictional resistance requires accurate setting and the fact that the tightening torque of the screw corresponding to a given frictional resistance strongly depends on the size tolerance of the outer and inner wings, the assembler is forced to tighten the screws with varying torques and resort to additional clamping means, such as snap means.

Accordingly, the object of the present invention is to improve the prior art collapsible lever device such as to ensure a collapse moment of the grip portion which is constant and independent of the size tolerance of the outer and inner wings of the hinge.

A further object of the present invention is to allow assembling the lever portions by tightening the screws thereof at a constant torque.

These and other objects are achieved by means of a control lever device for vehicles comprising:
- a support structure with means for connecting the device to a handlebar;
- an actuator connected to the support structure;
- a lever having a base portion and a grip portion, wherein the base portion is hinged to the support structure and connected to the actuator such that a rotation of the base portion relative to the support structure involves an operation of the actuator,

- a collapse hinge connecting the grip portion to the base portion such that the grip portion can rotate about a collapse axis in the event of impact against the lever, wherein the collapse hinge comprises:
- a first outer wing and a second outer wing formed in one of the lever portions,
- an intermediate wing formed in the other lever portion and interposed between the two outer wings,
- a screw accommodated within co-axial holes formed in the two outer wings and in the intermediate wing,
wherein the screw is freely accommodated within the holes of the intermediate wing and of the first outer wing and it is screwed only in the hole of the second outer wing and a head of the screw is directly or indirectly abutted against the intermediate wing such as to tighten the intermediate wing between the head of the screw and the second outer wing.

In order to better understand the invention and appreciate the advantages thereof, some exemplary nonlimiting embodiments of the same will be described herein below, with reference to the annexed drawings, in which:

- Fig. 1 is a view of a control lever device according to an embodiment of the invention;

- Fig. 2 is an exploded view of a lever of the device according to an embodiment of the invention;

- Fig. 3 is an exploded and enlarged view of a detail of the lever from Fig. 2;

Fig. 4 is a sectional view of the detail in Fig. 3 in an assembled configuration;

- Fig. 5 is an exploded view of a lever of the device according to a further embodiment of the invention;

- Fig. 6 is an exploded and enlarged view of a detail of the lever from Fig. 5;

- Fig. 7 is a sectional view of the detail in Fig. 6 in the assembled configuration;

- Fig. 8 is an exploded view of a lever of the device according to a further embodiment of the invention;

- Fig. 9 is an exploded and enlarged view of a detail of the lever from Fig. 8;

- Fig. 10 is a sectional view of the detail in Fig. 9 in an assembled configuration;

- Fig. 11 is an exploded view of a lever of the device according to a further embodiment of the invention;

- Fig. 12 is a partially cut-away view of a detail of the lever in Fig. 11 in an assembled configuration.

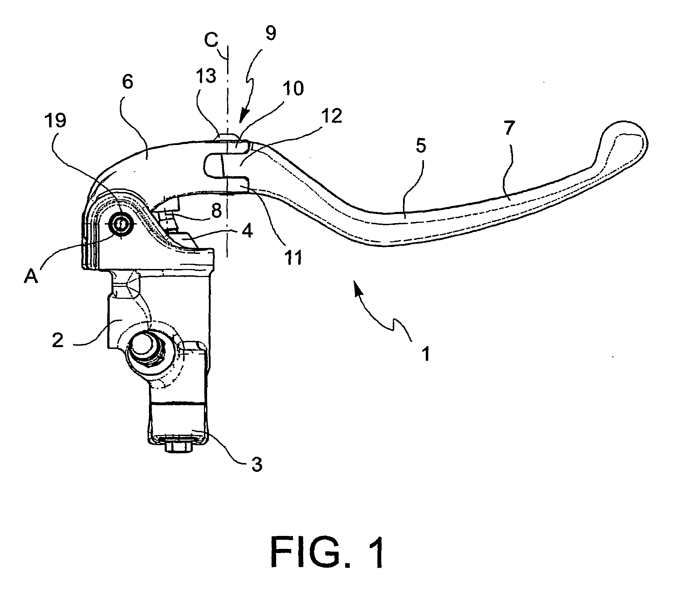

With reference to Fig. 1, a control lever device is generally designated with numeral 1. The device 1 comprises a support structure 2 with means for connecting the device 1 to a handlebar, for example one or more tightening portions 3 provided with suitable holes that are optionally threaded to house tightening screws. A cylinder-piston assembly is connected to the support structure 2, such as in the form of a cylinder-piston unit being fabricated separately of the support structure and subsequently connected thereto, or a cylindrical seat that is directly formed in the support structure 2 and that slidably houses a piston 4.

A lever 5 is connected to the support structure 2. Particularly, this lever 5 has a base portion 6 and a grip portion 7. The base portion 6 is hinged to the support structure 2 and connected to the hydraulic piston 4 by means of a transmission portion 8 such that a rotation of the base portion 6 of the lever relative to the support structure 2 involves an operation of the hydraulic actuator.

The grip portion 7 is, in turn, pivotally connected to the base portion 6 such that the grip portion 7 can rotate about a collapse axis C in the event of impact against the lever 5. The pivoting connection between the base portion 6 and the grip portion 7 of the lever 5 is provided by means of a collapse hinge 9 comprising a first outer wing 10 and a second outer wing 11 formed in one of the portions 6, 7 of lever 5 (for example in the base portion 6) and an intermediate wing 12 formed in the other portion of the lever 5 (for example, in the grip portion 7) and interposed between the two outer wings 10, 11. The two portions of the collapse hinge 9 are pivotally connected by means of a screw 13 housed within co-axial holes 14, 15, 16 formed in the two outer wings 10, 11 and in the intermediate wing 12.

According to an aspect of the invention, the screw 13 is freely accommodated within the holes 14, 16 of the intermediate wing 12 and first outer wing 10 and only screwed or bolted to the second outer wing 11. Thereby, the head 18 of screw 13 can freely turn and translate within the hole 14 of the first outer wing 10 and directly or indirectly abuts against the intermediate wing 12 such as to tighten the intermediate wing 12 between the head of the screw 18 and the second outer wing 11.

The screw 13 can be tightened within an inner thread 17 of the hole 15 of the second outer wing 11 or, alternatively, this screw 13 is bolted within the hole 15 by a nut (not shown in the figures) which provides an abutment surface abutting from the outside to the second outer wing 11.

The tightening force of the screw 13 generates a frictional resistance between the two portions of the collapse hinge 9 such as to prevent the grip portion 7 from inadvertedly rotating while ensuring the collapse of the lever in the event of a fall.

Due to the general configuration described above, the frictional resistance of the collapse hinge 9 is independent of the size tolerance of the outer and intermediate wings 10, 11, 12 and only depends on the tightening force of the screw 13. This allows the mass assembling of the screw by means of a constant torque electric screwer and ensures the reproducibility of the same resisting moment throughout the assembled collapsible levers.

In accordance with an embodiment, the collapse axis C defined by the screw 13 is transversal, preferably perpendicular to the control axis A (pin 19), such that the grip portion 7 of lever 5 can collapse in a plane transversal to the plane in which the lever 5 rotates during the normal operation of the brake or clutch.

According to an alternative embodiment, the collapse axis C is substantially parallel to the control axis A. In this case, the base portion and the grip portion comprise mutual abutment surfaces which are configured such as to prevent a collapse of the grip portion 7 in the operating direction of the device 1 (lever 5 being moved to the motorcycle handlebar) and to allow only a collapse movement in the opposite direction.

In accordance with an embodiment, the collapse hinge 9 further comprises sliding means, for example a plate or washer device interposed between the head 18 of the screw 13 and the intermediate wing 12, preferably both between the head 18 of the screw 13 and the intermediate wing 12, and between the intermediate wing 12 and the second outer wing 11 and configured to uncouple the rotary movement of the intermediate wing from the outer wings and head 18 of the screw 13. Particularly, the sliding means allow a relative sliding between the intermediate wing and the outer wings as well as between the intermediate wing and the head of the screw and prevent dragging effects from occurring between these components of the collapse hinge 9, for example due to the fact that the plate or washer device is rotatably locked relative to the outer wings 10, 11.

The rotary movement of the intermediate wing uncoupling from the screw ensures a substantially even frictional resistance during the collapse rotation and after the lever 5 has been repositioned, and however, even in the absence of these events.

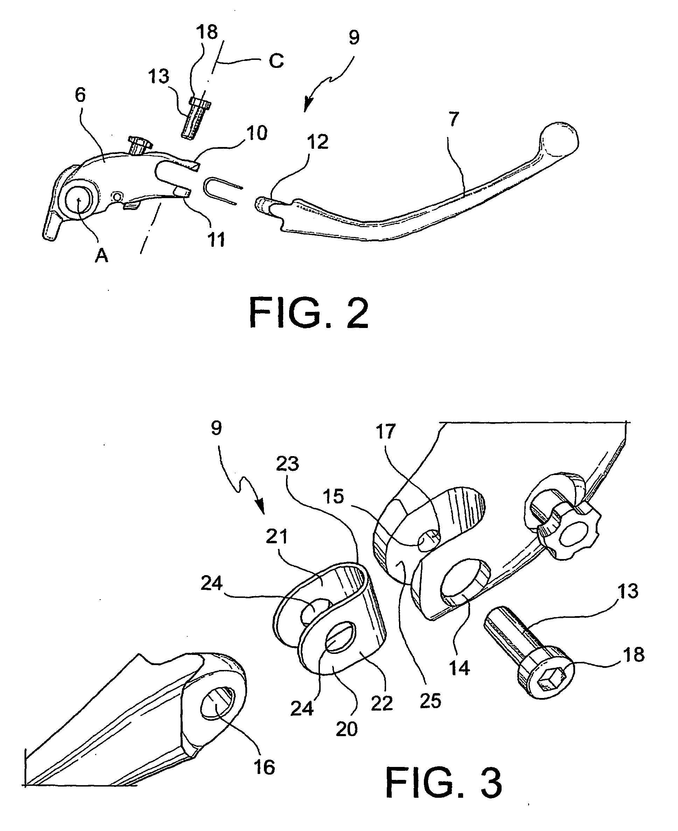

Fig. 2, 3 and 4 illustrate an embodiment of the invention, wherein the collapse hinge 9 comprises a U-shaped plate 20 that is arranged such as to at least partially envelope the intermediate wing 12. The U-shaped plate 20 comprises a first portion 21 interposed between the intermediate wing 12 and the second outer wing 11 and a second portion 22 interposed between the head 18 of the screw 13 and the intermediate wing 12 and preferably also between the first outer wing 10 and the intermediate wing 12, as well as a base 23 connecting the first 21 and second 22 portions of the plate 20. The first and second portions 21, 22 define preferably co-axial holes 24 that are suitable to accommodate the screw 13. The shape and position of the base 23 and holes 24 of the U-shaped plate 20 are selected such that, when the lever is assembled, the plate 20 results to be rotatably locked relative to the two outer wings 10, 11 of the collapse hinge 9.

In accordance with this embodiment, the intermediate wing 12 is shaped, preferably round-shaped, such as to be capable of rotating relative to the U-shaped plate 20 about the collapse axis C, when the impact against the lever 5 exceeds the frictional resistance threshold as determined by the tightening force of the screw 13.

Due to the U-shaped plate 20 enveloping the intermediate wing 12 on two opposite sides, on the one side the desired uncoupling of the screw is obtained from the rotation of the intermediate wing (thereby eliminating any dragging effect), and on the other side two friction interfaces are available between the plate and the intermediate wing, which facilitate providing the desired frictional resistance.

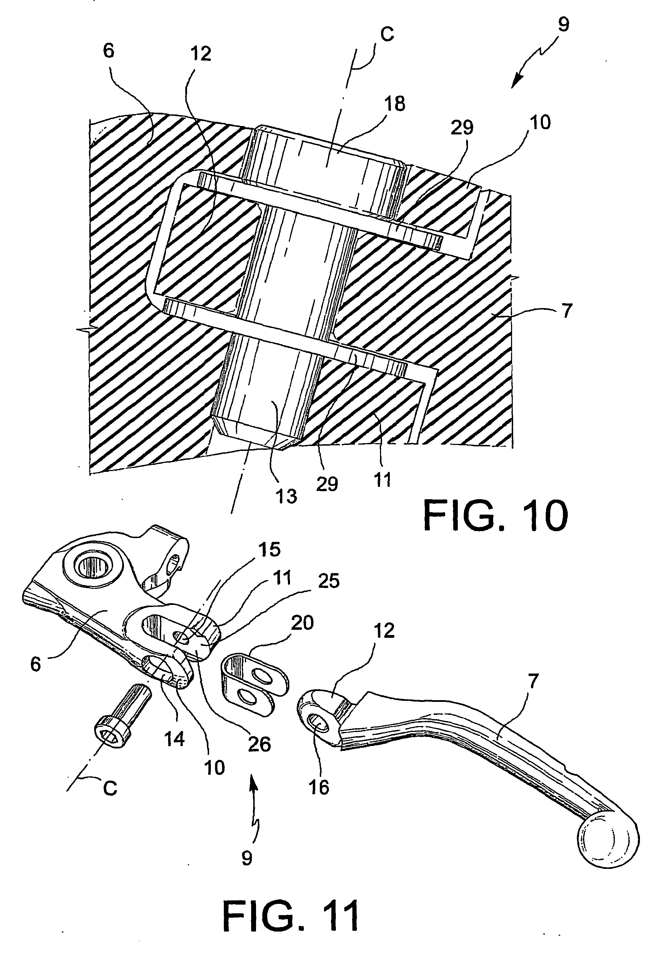

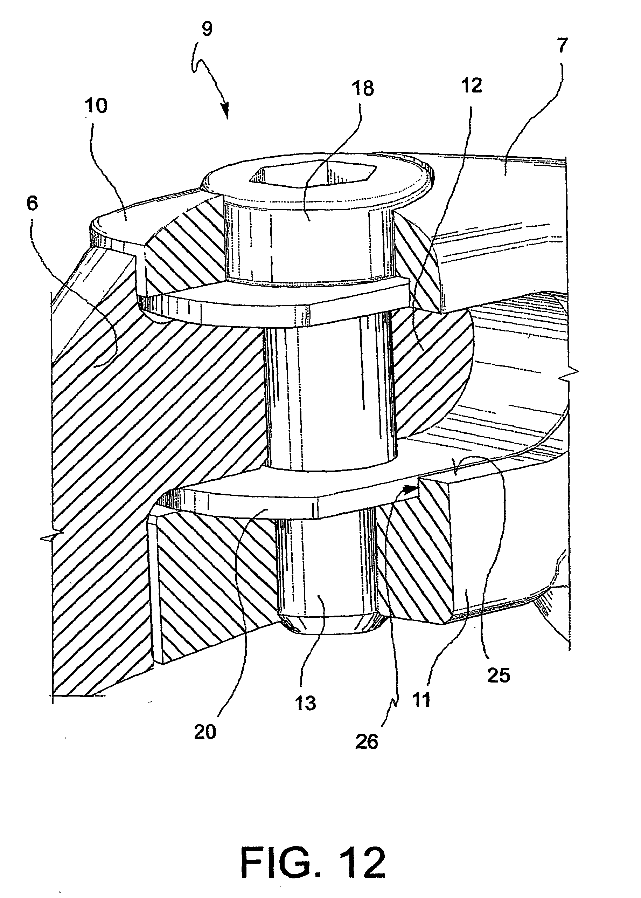

In accordance with a further embodiment illustrated in Fig. 11 and 12, in the surfaces 25 of the outer wings 10, 11 facing the intermediate wing 12, one or more seats 26 are formed that are suitable to integrally rotatably accommodating the corresponding portion 21, 22 of the U-shaped plate 20.

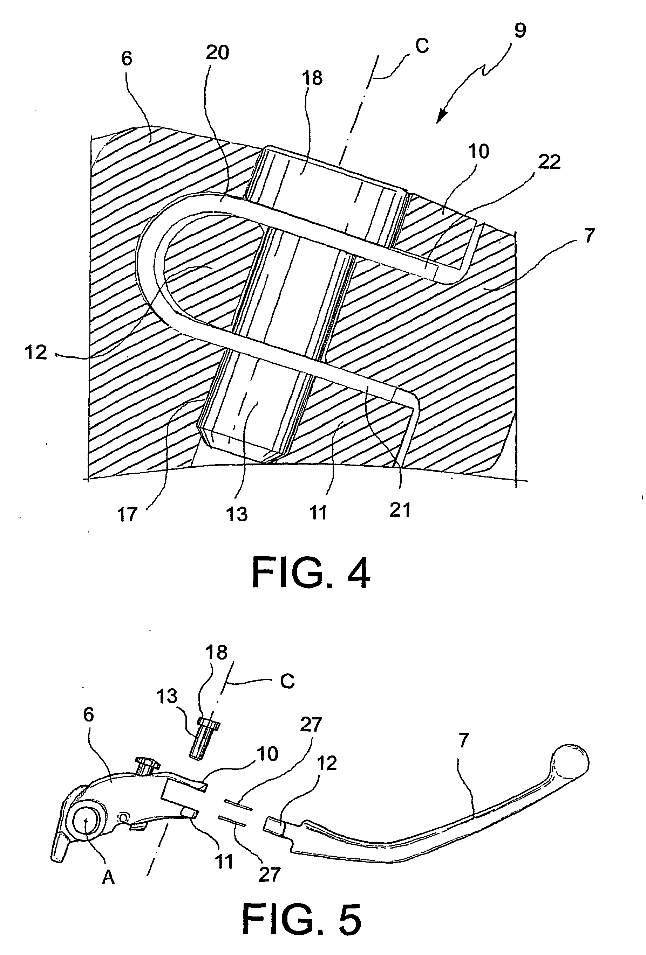

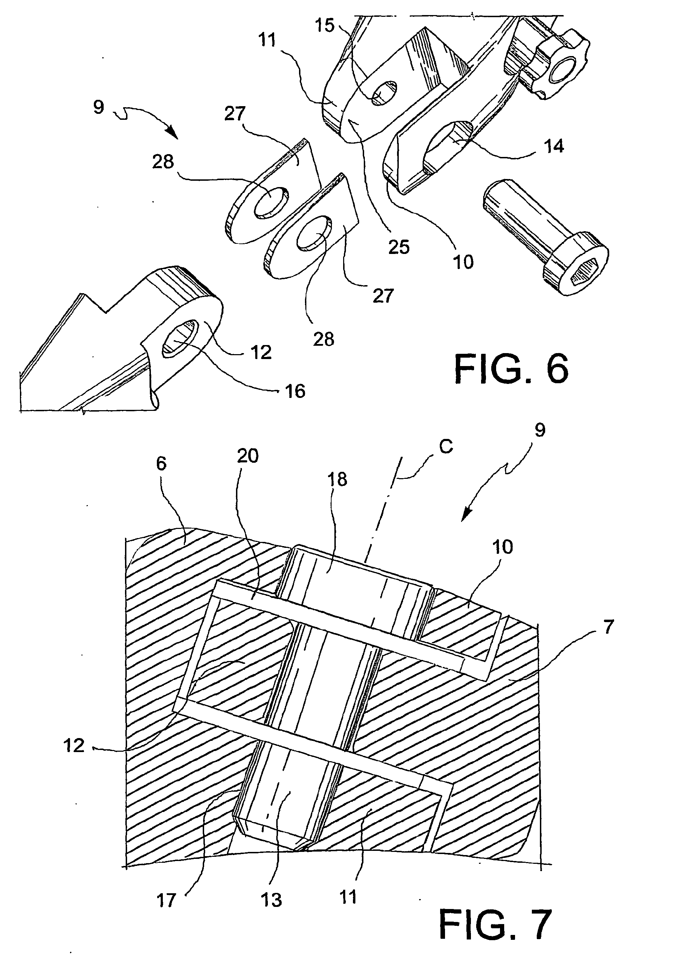

Fig. 5, 6 and 7 illustrate a further embodiment of the invention in which the collapse hinge 9 comprises two flat plates 27 each being arranged between the intermediate wing 12 and the second outer wing 11 and the other between the head 18 of the screw 13 and the intermediate wing 12 and preferably also between the first outer wing 10 and the intermediate wing 12. The plates 27 define holes 28 suitable to accommodate the screw 13. The shape of the plates 27 and the position of the holes 28 are selected such that, when the lever is assembled, the plates 27 are rotatably locked relative to the two outer wings 10, 11 of the collapse hinge 9.

In accordance with this embodiment, the intermediate wing 12 is shaped such as to be capable of rotating relative to the plates 27 about the collapse axis C, when the impact against the lever 5 exceeds the frictional resistance threshold as determined by the tightening force of the screw 13.

Due to the plates 27 being arranged on the two opposite sides of the intermediate wing 12, on the one side the desired uncoupling of the screw is obtained from the rotation of the intermediate wing (thereby eliminating any dragging effect), and on the other side two friction interfaces are available between the plates and the intermediate wing, which facilitate providing the desired frictional resistance.

Also in this case, in the surfaces 25 of the outer wings 10, 11 facing the intermediate wing 12, one or more seats 26 can be provided, which are suitable to integrally rotatably accommodate the plates 27.

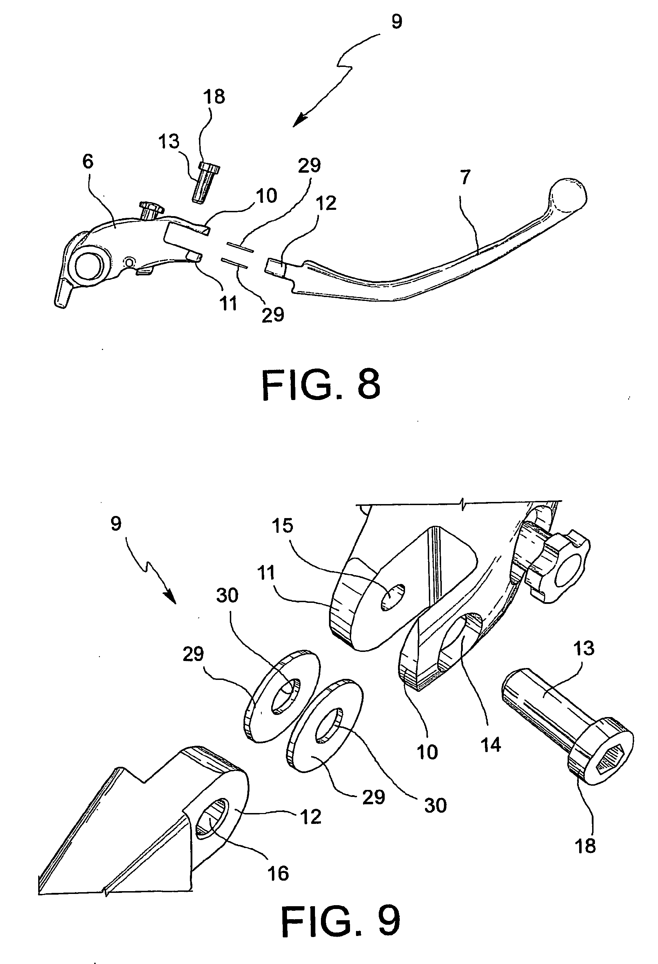

Fig. 8, 9 and 10 illustrate an embodiment in which the collapse hinge 9 comprises two plain washers 29 that are arranged the one between the intermediate wing 12 and the second outer wing 11 and the other between the head 18 of the screw 13 and the intermediate wing 12 and preferably also between the first outer wing 10 and the intermediate wing 12. The washers 29 define holes 30 suitable to accommodate the screw 13. In this embodiment, the washers 29 can rotate together with the intermediate wing 12.

The sliding means, i.e. the plate or washer devices of the collapse hinge 9 are preferably made from a different material than the material of the outer 10, 11 and intermediate 12 wings.

The operation of the control lever device according to the invention will be described below.

Upon normal use of the device and in the absence of a manual operation of the latter, the grip portion 7 is held in the position thereof relative to the base portion 6 of the lever due to friction between the intermediate wing and the second outer wing, and depending on the embodiment, due to the friction occurring in the interfaces between the plates and the intermediate wing.

Following a manual operation of the lever 5, the latter rotates about the control axis A (by moving towards the handlebar), thereby also displacing the transmission portion 8 which transmits the movement of lever 5 to the piston 4. Piston 4 is then displaced from its end-of-stroke rest position to a work position to operate either the clutch or the brake being hydraulically connected thereto.

In the event of an accident, or a simple fall of the motorcycle causing a movement of the lever 5 that has a rotational component about the collapse axis C, the grip portion 7 can rotate in the collapse hinge relative to the base portion 6 to prevent breakage or deformation of the lever.

After the fall, when the motorcycle handlebar is no longer rested on the ground, the motorcycle can bring the grip portion 7 back to the operating position. To the purpose, a sufficiently high momentum is only required to be applied to the grip portion 7 such as to overcome the frictional resistance in the collapse hinge.

Due to the sliding means and to the uncoupling of the intermediate wing rotary movement, the collapse rotation and the subsequent rotation for repositioning the lever grip portion do not involve screwing or unscrewing the screw 13 within the hole 15, thereby the frictional resistance is substantially unchanged within the collapse hinge.

While embodiments have been described above in which the lever control device is provided with a hydraulic actuator, the present invention can be as advantageously applied to control devices having different actuators, for example Bowden cable or lever actuators.

As may be appreciated from the description above, the device according to the invention has a number of advantages.

It avoids any damages to the lever and transmission portion following a severe impact against the control lever.

Furthermore, the device allows automatized assembly with a good reproducibility of the required frictional resistance.

Finally, the frictional resistance in the collapse hinge is substantially unchanged during the collapse movement and during a subsequent repositioning movement of the lever, and however also in the absence of these events.

## Claims

1. A control lever device (1) for vehicles, comprising:
- a support structure (2) with means for connecting the device (1) to a handlebar;
- an actuator (4) connected to the support structure (2);
- a lever (5) having a base portion (6) and a grip portion (7), wherein the base portion (6) is hinged to the support structure (2) and connected to the actuator (4) such that a rotation of the base portion (6) relative to the support structure (2) entails an operation of the actuator (4),
- a collapse hinge (9) connecting the grip portion (7) to the base portion (6) such that the grip portion (7) can rotate about a collapse axis (C) in the event of impact against the lever (5),
wherein the collapse hinge (9) comprises:
- a first outer wing (10) and a second outer wing (11) formed in one (6) of the base or grip portions (6, 7),
- an intermediate wing (12) formed in the other portion (7) of the lever (5) and interposed between the two outer wings (10, 11),
- a screw (13) accommodated within co-axial holes (14, 15, 16) formed in the two outer wings (10, 11) and in the intermediate wing (12),
**characterized in that** the screw (13) is freely accommodated within the holes (16, 14) of the intermediate wing (12) and of the first outer wing (10) and it is only screwed or bolted to the second outer wing (11) and a head (18) of the screw (13) is directly or indirectly abutted against the intermediate wing (12) such as to tighten the intermediate wing (12) between the head (18) of the screw and the second outer wing (11).

2. The device (1) according to claim 1, wherein the collapse hinge (9) comprises sliding means (20, 27, 29) interposed between the head (18) of the screw (13) and the intermediate wing (12) and configured to uncouple the rotary movement of the intermediate wing (12) from the head (18) of the screw (13).

3. The device (1) according to claim 2, wherein the sliding means comprise a plate device being rotatably locked relative to said outer wings (10, 11).

4. The device (1) according to claim 2, wherein the collapse hinge (9) comprises a U-shaped plate (20) having a first portion (21) interposed between the intermediate wing (12) and the second outer wing (11) and a second portion (22) interposed between the head (18) of the screw (13) and the intermediate wing (12), as well as a base (23) connecting the first (21) and second (22) portions to each other,
wherein said first and second portions (21, 22) of the U-shaped plate (20) define holes (24) suitable to accommodate the screw (13) and the shape and position of said base (23) and said holes (24) are selected such that, when the lever (5) is assembled, said plate (20) results to be rotatably locked relative to the two outer wings (10, 11) of the collapse hinge (9).

5. The device (1) according to the preceding claim 4, wherein the intermediate wing (12) is configured such as to be capable of rotating relative to the U-shaped plate (20) about the collapse axis (C), when the impact against the lever (5) exceeds the frictional resistance threshold as determined by the tightening force of the screw (13).

6. The device (1) according to claim 4 or 5, wherein said U-shaped plate (20) provides two frictional interfaces between the plate (20) and the intermediate wing (12).

7. The device (1) according to any claim 4 to 6, wherein in the surfaces (25) of the outer wings (10, 11) facing the intermediate wing (12), one or more seats (26) are formed that are suitable to integrally rotatably accommodating the corresponding portion (21, 22) of the U-shaped plate (20).

8. The device (1) according to claim 2, wherein the collapse hinge (9) comprises two flat plates (27) being arranged the one between the intermediate wing (12) and the second outer wing (11) and the other between the head (18) of the screw (13) and the intermediate wing (12), wherein the plates (27) define holes (28) suitable to accommodate the screw (13) and the shape of the plates (27) and the position of the holes (28) are selected such that, when the lever (5) is assembled, said plates (20) result to be rotatably locked relative to the two outer wings (10, 11) of the collapse hinge (9).

9. The device (1) according to the preceding claim 8, wherein said plates (27) provide two frictional interfaces between the plates (27) and the intermediate wing (12).

10. The device (1) according to any claim 2 to 9, wherein said sliding means or said plate means are made from a different material than the outer (10, 11) and intermediate (12) wings.

11. The device (1) according to any preceding claims, wherein the collapse axis (C) as defined by the screw (13) is transversal, preferably perpendicular to the control axis (A) of lever (5), such that the grip portion (7) of the lever (5) can collapse in a plane transversal to the plane in which the lever (5) rotates during the normal operation of the device (1).

12. The device (1) according to any claim 1 to 10, wherein the collapse axis (C) is substantially parallel to the control axis (A) and the base portion (6) and grip portion (7) comprise mutual abutment surfaces that are configured such as to prevent a collapse of the grip portion (7) in the operating direction of the device (1) and to allow only a collapse movement in the opposite direction.

13. The device (1) according to any preceding claim, wherein the screw (13) is screwed in an inner thread (17) of the hole (15) of the second outer wing (11).

## Patentansprüche

1. Eine Steuerungshebelvorrichtung (1) für Fahrzeuge, aufweisend:
- ein Stützelement (2) mit Mittel, um die Vorrichtung (1) an einem Lenker zu befestigen;
- ein Betätiger (4) verbunden mit dem Stützelement (2);
- ein Hebel (5) mit einem Basisteil (6) und einem Griffteil (7), wobei das Basisteil (6) gegenüber dem Stützelement (2) klappbar ist und an dem Betätiger (4) derart befestigt ist, dass ein Drehen des Basisteils (6) relativ zu dem Stützelement (2) ein Betätigen des Betätigers (4) verursacht,
- ein Klappgelenk (9), das das Griffteil (7) mit dem Basisteil derart verbindet, dass das Griffteil im Falle eines Stoßes gegen den Hebel (5) um eine Klappachse (C) drehen kann,
wobei das Klappgelenk (9) aufweist:
- einen ersten äußeren Flügel (10) und einen zweiten äußeren Flügel (11) gebildet in einem von dem Basis- oder Griffteilen (6, 7),
- einen Zwischenflügel (12) gebildet in dem anderen Teil (7) von dem Hebel (5) und angeordnet zwischen den äußeren Flügeln (10, 11),
- eine Schraube (13) untergebracht in koaxialen Löchern (14, 15, 16) gebildet in den beiden äußeren Flügeln (10, 11) und in dem Zwischenflügel (12),
**dadurch gekennzeichnet, dass**
die Schraube (13) in den Löchern (16, 14) von dem Zwischenflügel (12) und von dem ersten äußeren Flügel (10) frei untergebracht ist und nur mit dem zweiten äußeren Flügel (11) verschraubt oder verriegelt ist und ein Kopf (18) von der Schraube (13) grenzt direkt oder indirekt an den Zwischenflügel (12), um den Zwischenflügel (12) zwischen dem Kopf (18) von der Schraube und dem zweiten äußeren Flügel (11) zu spannen.

2. Die Vorrichtung (1) gemäß Anspruch 1, wobei das Klappgelenk (9) aufweist Gleitmittel (20, 27, 29) angeordnet zwischen dem Kopf (18) von der Schraube (13) und dem Zwischenflügel (12) und ausgestaltet, um die Drehbewegung des Zwischenflügels (12) von dem Kopf (18) von der Schraube (13) zu entkoppeln.

3. Die Vorrichtung (1) gemäß Anspruch 2, wobei das Gleitmittel aufweist eine Plattenvorrichtung, die bezüglich der Drehung gesichert ist relativ zu den äußeren Flügeln (10, 11).

4. Die Vorrichtung (1) gemäß Anspruch 2, wobei das Klappgelenk (9) eine U-förmige Platte (20) aufweist mit einem ersten Teil (21) angeordnet zwischen dem Zwischenflügel (12) und dem zweiten äußeren Flügel (11) und einem zweiten Teil (22) angeordnet zwischen dem Kopf (18) von der Schraube (13) und dem Zwischenflügel (12) sowie einer Basis (23), die die ersten (21) und zweiten (22) Teile miteinander verbindet,
wobei die ersten und zweiten Teile (21, 22) von der U-förmigen Platte (20) Löcher (24) definieren, die geeignet sind, um die Schraube (13) aufzunehmen und die Form und die Anordnung von der Basis (23) und den Löchern (24) sind derart ausgewählt, dass wenn der Hebel (5) zusammengebaut ist dies ergibt, dass die Platte (20) bezüglich der Drehung gesichert ist relativ zu den zwei äußeren Flügeln (10, 11) des Klappgelenks (9).

5. Die Vorrichtung (1) gemäß dem vorhergehenden Anspruch 4, wobei der Zwischenflügel (12) derart ausgestaltet ist, dass er drehbar ist relative zu der U-förmigen Platte (20) um die Klappachse (C), wenn der Stoß gegen den Hebel (5) den Reibungswiderstandsgrenzwert wie er durch die Spannkraft der Schraube (13) bestimmt wird überschreitet.

6. Die Vorrichtung (1) gemäß den Ansprüchen 4 oder 5, wobei die U-förmige Platte (20) zwei Reibungsschnittstellen zwischen der Platte (20) und dem Zwischenflügel (12) bereitstellt.

7. Die Vorrichtung (1) gemäß jeglichem der Ansprüche 4 bis 6, wobei in den Oberflächen (25) von den äußeren Flügeln (10, 11) die zu dem Zwischenflügel (12) zeigen, ein oder mehrere Sitze (26) gebildet sind, die geeignet sind, um integral und drehbar den entsprechenden Teil (21, 22) von der U-förmigen Platte (20) unterzubringen.

8. Die Vorrichtung (1) gemäß Anspruch 2, wobei das Klappgelenk (9) zwei flache Platten (27) aufweist, die angeordnet sind, die eine zwischen dem Zwischenflügel (12) und dem zweiten äußeren Flügel (11) und die andere zwischen dem Kopf (18) von der Schraube (13) und dem Zwischenflügel (12),
wobei die Platten (27) Löcher (28) definieren, die geeignet sind, um die Schraube (13) unterzubringen und die Form von den Platten (27) und die Position von den Löchern (28) sind derart ausgewählt, dass wenn der Hebel (5) zusammengebaut ist, dies ergibt, dass die Platten (20) bezüglich des Drehens gesichert sind relativ zu den zwei äußeren Flügeln (10, 11) des Klappgelenks (9).

9. Die Vorrichtung (1) gemäß dem vorhergehenden Anspruch 8, wobei die Platten (27) zwei Reibungsschnittstellen zwischen den Platten (27) und dem Zwischenflügel (12) bereitstellen.

10. Die Vorrichtung (1) gemäß jeglichem der Ansprüche 2 bis 9, wobei das Gleitmittel oder das Plattenmittel hergestellt ist aus einem anderen Material als die äußeren Flügel (10, 11) und die Zwischenflügel (12).

11. Die Vorrichtung (1) gemäß jeglichem der vorhergehenden Ansprüche, wobei die Klappachse (C) wie sie durch die Schraube (13) definiert ist transversal, vorzugsweise rechtwinkelig zu der Steuerungsachse (A) von dem Hebel (5) ist, so dass das Griffteil (7) von dem Hebel (5) in einer Ebene klappen kann die transversal ist zu der Ebene in der sich der Hebel (5) während dem normalen Betrieb der Vorrichtung (1) dreht.

12. Die Vorrichtung (1) gemäß jeglichem von Ansprüchen 1 bis 10, wobei die Klappachse (C) im Wesentlichen parallel ist zu der Steuerungsachse (A) und das Basisteil (6) und das Griffteil (7) gemeinsame Grenzoberflächen aufweisen, die derart ausgebildet sind, um ein Klappen des Griffteils (7) in der Betriebsrichtung der Vorrichtung (1) zu verhindern und nur eine Klappbewegung in der entgegengesetzten Richtung zu ermöglichen.

13. Die Vorrichtung (1) gemäß jeglichem der vorgehenden Ansprüche, wobei die Schraube (13) in ein inneres Gewinde (17) von dem Loch (15) des zweiten äußeren Flügels (11) geschraubt ist.

## Revendications

1. Dispositif de levier de commande (1) pour véhicules, comprenant :
une structure de support (2) avec des moyens pour raccorder le dispositif (1) à un guidon ;
un actionneur (4) raccordé à la structure de support (2) ;
un levier (5) ayant une partie de base (6) et une partie de poignée (7), dans lequel la partie de base (6) est articulée par rapport à la structure de support (2) et raccordée à l'actionneur (4) de sorte qu'une rotation de la partie de base (6) par rapport à la structure de support (2) entraîne une opération de l'actionneur (4),
une articulation pliable (9) raccordant la partie de poignée (7) à la partie de base (6) de sorte que la partie de poignée (7) peut tourner autour d'un axe de pliage (C) en cas de choc contre le levier (5),
dans lequel l'articulation pliable (9) comprend :
une première aile externe (10) et une seconde aile externe (11) formées dans l'une (6) des parties de base ou de poignée (6, 7),
une aile intermédiaire (12) formée dans l'autre partie (7) du levier (5) et intercalée entre les deux ailes externes (10, 11),
une vis (13) logée à l'intérieur de trous coaxiaux (14, 15, 16) formés dans les deux ailes externes (10, 11) et dans l'aile intermédiaire (12),
**caractérisé en ce que** la vis (13) est librement logée à l'intérieur des trous (16, 14) de l'aile intermédiaire (12) et de la première aile externe (10) et elle est uniquement vissée ou boulonnée sur la seconde aile externe (11) et une tête (18) de la vis (13) vient directement ou indirectement en butée contre l'aile intermédiaire (12) afin de serrer l'aile intermédiaire (12) entre la tête (18) de la vis et la seconde aile externe (11).

2. Dispositif (1) selon la revendication 1, dans lequel l'articulation pliable (9) comprend des moyens de coulissement (20, 27, 29) intercalés entre la tête (18) de la vis (13) et l'aile intermédiaire (12) et configurés pour découpler le mouvement rotatif de l'aile intermédiaire (12) de la tête (18) de la vis (13).

3. Dispositif (1) selon la revendication 2, dans lequel les moyens de coulissement comprennent un dispositif de plaque qui est bloqué en rotation par rapport auxdites ailes externes (10, 11).

4. Dispositif (1) selon la revendication 2, dans lequel l'articulation pliable (9) comprend une plaque en forme de U (20) ayant une première partie (21) intercalée entre l'aile intermédiaire (12) et la seconde aile externe (11) et une seconde partie (22) intercalée entre la tête (18) de la vis (13) et l'aile intermédiaire (12), ainsi qu'une base (23) raccordant les première (21) et seconde (22) parties entre elles,
dans lequel lesdites première et seconde parties (21, 22) de la plaque en forme de U (20) définissent des trous (24) appropriés pour loger la vis (13) et la forme et la position de ladite base (23) et desdits trous (24) sont choisies de sorte que, lorsque le levier (5) est assemblé, ladite plaque (20) est bloquée de manière rotative par rapport aux deux ailes externes (10, 11) de l'articulation pliable (9).

5. Dispositif (1) selon la revendication 4, dans lequel l'aile intermédiaire (12) est configurée afin de pouvoir tourner par rapport à la plaque en forme de U (20) autour de l'axe pliable (C), lorsqu'un choc contre le levier (5) dépasse le seuil de résistance de friction tel que déterminé par la force de serrage de la vis (13).

6. Dispositif (1) selon la revendication 4 ou 5, dans lequel ladite plaque en forme de U (20) fournit deux interfaces de friction entre la plaque (20) et l'aile intermédiaire (12).

7. Dispositif (1) selon l'une quelconque des revendications 4 à 6, dans lequel, dans les surfaces (25) des ailes externes (10, 11) faisant face à l'aile intermédiaire (12), on forme un ou plusieurs sièges (26) qui sont appropriés pour loger de manière solidaire en rotation la partie correspondante (21, 22) de la plaque en forme de U (20).

8. Dispositif (1) selon la revendication 2, dans lequel l'articulation pliable (9) comprend deux plaques plates (27), l'une étant agencée entre l'aile intermédiaire (12) et la seconde aile externe (11), et l'autre étant agencée entre la tête (18) de la vis (13) et l'aile intermédiaire (12),
dans lequel les plaques (27) définissent des trous (28) appropriés pour loger la vis (13) et la forme des plaques (27) et la position des trous (28) sont choisies de sorte que lorsque le levier (5) est assemblé, lesdites plaques (20) sont bloquées de manière rotative par rapport aux deux ailes externes (10, 11) de l'articulation pliable (9).

9. Dispositif (1) selon la revendication 8, dans lequel lesdites plaques (27) fournissent deux interfaces de friction entre les plaques (27) et l'aile intermédiaire (12).

10. Dispositif (1) selon l'une quelconque des revendications 2 à 9, dans lequel lesdits moyens de coulissement ou lesdits moyens de plaque sont réalisés à partir d'un matériau différent des ailes externes (10, 11) et intermédiaire (12).

11. Dispositif (1) selon l'une quelconque des revendications précédentes, dans lequel l'axe pliable (C) tel que défini par la vis (13), est transversal, de préférence perpendiculaire à l'axe de commande (A) du levier (5), de sorte que la partie de poignée (7) du levier (5) peut se plier dans un plan transversal par rapport au plan dans lequel le levier (5) tourne pendant le fonctionnement normal du dispositif (1).

12. Dispositif (1) selon l'une quelconque des revendications 1 à 10, dans lequel l'axe pliable (C) est sensiblement parallèle à l'axe de commande (A) et la partie de base (6) et la partie de poignée (7) comprennent des surfaces de butée mutuelles qui sont configurées afin d'empêcher un pliage de la partie de poignée (7) dans la direction de fonctionnement du dispositif (1) et pour permettre uniquement un mouvement de pliage dans la direction opposée.

13. Dispositif (1) selon l'une quelconque des revendications précédentes, dans lequel la vis (13) est vissée dans un filetage interne (17) du trou (15) de la seconde aile externe (11).
